(19)

**Europäisches Patentamt**
**European Patent Office**
**Office européen des brevets**

(11) **EP 2 803 879 B1**

(12) **EUROPEAN PATENT SPECIFICATION**

(45) Date of publication and mention
of the grant of the patent:
**03.08.2016 Bulletin 2016/31**

(51) Int Cl.:
*F16G 1/00* *(2006.01)* *F16G 1/28* *(2006.01)*

(21) Application number: **14168746.7**

(22) Date of filing: **16.05.2014**

(54) **Toothed transmission belt.**

Gezahnter Antriebsriemen.

Courroie de transmission denteé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.05.2013 IT TO20130397**

(43) Date of publication of application:
**19.11.2014 Bulletin 2014/47**

(73) Proprietor: **Dayco Europe S.R.L.**
**Chieti (IT)**

(72) Inventors:
• **Di Marino, Paolo**
**66100 Chieti (IT)**
• **Di Meco, Marco**
**66100 Chieti (IT)**

(74) Representative: **Fiussello, Francesco et al**
**Studio Torta S.p.A.**
**Via Viotti, 9**
**10121 Torino (TO) (IT)**

(56) References cited:
**WO-A1-2010/108467**

• **Contitech Ag: "Product Range SYNCHROFLEX Timing Belts - Power Transmission Group", , 20 May 2009 (2009-05-20), XP055014456, Retrieved from the Internet: URL:http://www.contitech.de/pages/produkte /antriebsriemen/antrieb-industrie/download /TD_Synchroflex_en.pdf [retrieved on 2011-12-09]**
• **"Application of Toothed Belts to OA Devices", 23 July 1986 (1986-07-23), J.E.E. Journal of Electronic Engineering, Tokyo, Japan, XP001665258, vol. 235, pages 52-54, * MXL Belt; page 53; table 2 ***

**Description**

TECHNICAL SECTOR

The present invention relates to a transmission belt, in particular a toothed transmission belt. The transmission belt of the present invention advantageously has helical toothing and is preferably used in electric power steering systems for vehicles.

STATE OF THE PRIOR ART

A widespread problem in the use of toothed transmission is that they generate noise and vibration, especially when driven at a high number of revolutions per minute.

The noise problem is the subject of numerous studies and different technical solutions, such as that of treating the fabric that covers the toothed working surfaces with treatments based on various chemical substances, for example.

Alternatively, it has been proposed to solve this problem by using helical teeth, as shown in Japanese patent JP4-330853 for example, to reduce noise in the meshing phase of teeth on the pulley. However, in drive transmission devices that require a large load or high speeds of rotation (for example, between 1500 and 4500 rpm) the noise reduction obtained using just helical belts is insufficient. It is also known from the publication "Noise and life of Helical Timing belt drives" in Journal of Mechanical Design, page 275, Vol. 121, June 1999, that to reduce noise it is advisable to use a helical belt for drive transmission between a helical toothed belt and a helical toothed pulley, wherein by defining

Pt as the tooth pitch
$\Theta$ as the tooth helix angle
and W as the belt width,
$\Theta$ is in the range $-0.2 \leq 1 - W.\tan/Pt \leq 0.75$.

In particular, it has been demonstrated in the above-mentioned article that noise is lower within this range. Still more particularly, it has been demonstrated that the noise is less when the angle $\Theta$ is 10° compared to when it is 5°.

From patent EP1614933, it is also known that within the above-described range for angle $\Theta$ and amply discussed in the previous article, helical belts are less noisy when the play is between 1.6% and 3%, where play is defined as the distance (D) between the tooth of the pulley and the tooth of the belt at a position along an arc C, where the arc C is an arc passing through the point that is distanced from the baseline (B) by half the height of the tooth and its centre coincides with the centre of the pulley.

A transmission belt according to the preamble of claim 1 is known from the publication "Application of toothed belts to OA devices" in the Journal of Electronic Engineering 2209, 23 July 1986, No. 235 Tokyo, Japan.

Even using all these teachings, it has still not been possible to provide a toothed belt capable of truly having low noise at high operating speeds.

In particular, the problem of high noise is felt in the automotive field, even more particularly in the automatic electric power steering device of motor vehicles.

The noise problem in this particular application is particularly felt at high frequencies when the noise generated by the belt meshing with the pulley is higher than that generated by the surrounding devices and hence the user notices precisely the noise of the belt.

It has in fact been verified that the belts currently on the market can exceed the threshold beyond which the vehicle user identifies the belt as being the source of noise.

As a rule, the loudest noise also occurs in conditions of resonance and, in particular, in the 1st, 2nd and 3rd modes of resonance.

The resonance speeds are calculated using the following formulas:

Natural vibration frequency of branch

$$f\_vibration = \sqrt{\dfrac{T}{4*ML*\left(\dfrac{Lt}{1000}\right)^2} + Cp}$$

where:

T = belt branch tension [N]
ML = mass per unit length [g/mm]
Lt = tensioned branch length [mm]
Cp = experimentally determined correction coefficient, in particular, determined by measuring the natural frequency at different known tensions for each mass per unit length and branch length.

In this description, mass per unit length is intended as the linear density, also known as linear mass or improperly as linear weight.

It is also necessary to measure the meshing frequency (f_meshing), which is given by the formula:

$$f\_meshing = \frac{\omega}{60} \cdot z_{drive}$$

where

$\omega$ = drive pulley speed [rpm]
Zdrive = number of drive pulley teeth.

When the meshing frequency equals natural vibration frequency, the condition for 1st mode resonance occurs.

To calculate the operating speed at which this phenomenon occurs, it is sufficient to set f_vibration = f_meshing.

The 2nd ($2\omega$) and 3rd ($3\omega$) modes occur at multiples of the calculated speed.

A solution is thus being sought that enables reducing noise at high frequencies, in particular at resonance values, without having to modify the entire transmission system, but just the belt.

SUMMARY OF INVENTION

The object of the present invention is to provide a toothed belt that, in use, generates low noise on average and, in particular, generates low noise at the normally noisier frequencies, namely those at the resonance values.

A further object of the present invention is to provide a drive transmission system including a toothed pulley and a toothed transmission belt that enables overcoming the above-described problems.

A further object of the present invention is a power steering unit for a motor vehicle comprising a drive transmission system including a toothed pulley and a toothed belt.

The above-stated object is achieved with a belt according to claim 1 and a transmission system according to claim 13.

BRIEF DESCRIPTION OF THE DRAWINGS

- Figure 1 is a schematic, partial view of a lateral section along the axis I of a portion of a toothed belt made according to the present invention;
- Figure 2 is a section along the II-II axis in Figure 1;
- Figure 3 is a diagram for calculating the helix angle of the belt in Figure 1 and 2; and
- Figure 4 is a diagram of the measurement conditions for the noise test.

DESCRIPTION OF INVENTION

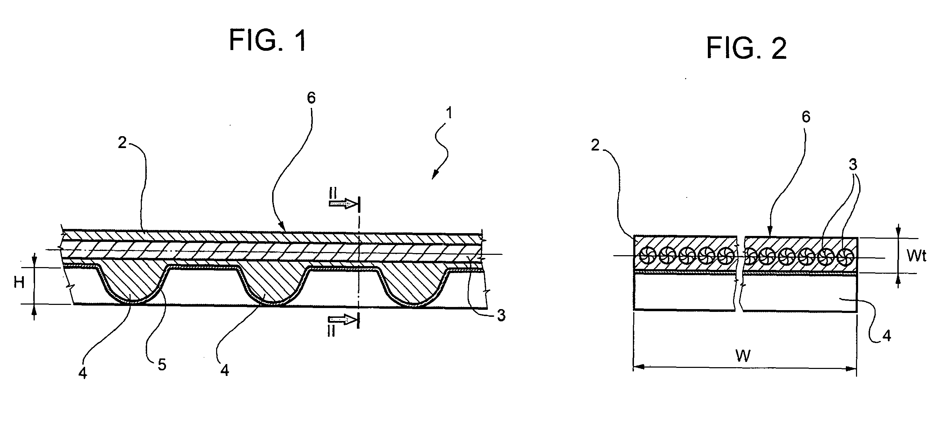

In Figure 1, a toothed belt is indicated as whole by reference numeral 1. The belt 1 comprises a body 2 made of an elastomeric material, in which a plurality of longitudinal thread-like durable inserts 3, or cords, are buried. The body 2 has a first face provided with toothing 4 that is covered by a covering fabric 5 and a second face or back 6 of the belt.

Preferably, the body 2 is made of a compound constituted by one or more elastomers, which for convenience are indicated as a whole by "first elastomeric material".

According to a preferred embodiment, the belt has helical toothing 4.

The following are indicated in Figures 1 to 3:

H= Tooth height
P= belt pitch (mm)

$W_t$= Web thickness
W= Belt width
$\theta$= Helix angle

Given that:

$$D = 100 \cdot \frac{W_t}{h \cdot P}$$

it has been surprisingly found that the belt generates less noise when D is between 60 and 250, especially at the resonance values, and therefore enables the above-described problems to be solved, as is also shown in the examples.

If the value of D is below 60, the belt has high noise levels, while above 250 the belt has a geometry that no longer allows adapting it to current transmission systems, in particular to power steering systems, because it is generally too thick.

On average, the higher the value of D the better the result in terms of noise reduction, but the belt's geometry is always further away from the optimal one.

Therefore, values between 100 and 220 are still further preferred, where it is possible to obtain optimal values in terms of low noise and correct belt geometry.

The web thickness $W_t$ is between 0.7 and 3 mm, advantageously between 1.4 and 2.7 mm.

Advantageously, the pitch is between 1.5 and 3.5 mm, more advantageously between 1.8 and 2.5 mm.

Advantageously, the tooth height is between 0.50 and 1.00 mm, more advantageously between 0.60 and 0.80 mm.

It has also been found that the width is preferably between 20 and 40 mm, more advantageously between 25 and 35 mm.

The first elastomeric material constituting the body of the belt advantageously comprises as the main elastomer, or rather that present for more than 50% by weight, an elastomer chosen from the group constituted by natural rubber, polychloroprene, acrylonitrile butadiene (NBR) and associated hydrogenated elastomers known as hydrogenated acrylonitrile butadiene (HNBR) or zinc salts of hydrogenated acrylonitrile butadiene seamed with esters of unsaturated carboxylic acid, polyisoprene, styrene-butadiene rubbers, ethylene-alpha-olefin elastomers, EPDM, polyurethane, fluoroelastomers, ethylene-acrylic elastomers (AEM), bromobutyls, chlorosulphonated polythene (CSM) or chlorosulphonated alkyl, chlorinated polythene, epoxidized natural rubber, SBR, NBR carboxylates, HNBR carboxylates, ACM and mixtures of these compounds.

The first elastomeric material is even more preferably constituted by one or more copolymers formed starting from a monomer containing nitrile groups and a diene in which the monomers containing the nitrile groups are in a percentage advantageously between 33% and 50% by weight with respect to the total weight of the final copolymers.

By "first elastomeric material is basically constituted" it is intended that small percentages of other polymers or copolymers can be added to the first elastomeric material without negatively affecting the chemical compatibility between the body compound and the other elements constituting the toothed belt and therefore without departing from the scope of the present invention.

More advantageously, the copolymer(s) used are hydrogenated acrylonitrile butadiene, or HNBR, possibly in a mixture with ethylene-alpha-olefin elastomers, such as EPR or EPDM.

Advantageously, the HNBR used has a high level of hydrogenation, for example so-called completely saturated HNBRs can be used, these having a percentage of residual double bonds of 0.9% at most, but HNBRs with a lower level of unsaturation can also be used in alternative, such as, for example, so-called partially saturated HNBRs having a saturation level of 4% or 5.5%.

Some examples of HNBR copolymers that can be used in the body compound, but also in the different treatments of the various elements forming the toothed belt, include copolymers belonging to the THERBAN family made by Lanxess. Alternatively, it is also possible to use HNBRs made by Nippon Zeon with the name ZETPOL.

The compound of the first elastomeric material can also comprise conventional additives such as, for example, reinforcement agents, extenders, pigments, stearic acid, accelerators, vulcanization agents, antioxidants, activators, initiators, plasticizers, waxes, prevulcanization inhibitors, antidegradants, process oils and similar.

Advantageously, carbon black can be employed as an extender, being advantageously added in quantities in the range between 0 and 80 phr, more advantageously about 40 phr.

Advantageously, light-coloured reinforcing extenders such as talc, calcium carbonate, silica and silicates are added in quantities advantageously in the range between 0 and 80 phr, advantageously about 40 phr. It is also possible to advantageously use silanes in quantities in the range between 0 and 5 phr.

Advantageously, zinc and magnesium oxides are added in a quantity advantageously ranging between 0 and 15 phr.

Advantageously, ester plasticizers such as trimellitates or ethyl esters are added in a quantity advantageously ranging between 0 and 20 phr.

Advantageously, prevulcanization coagents such as triallyl cyanurates and organic or inorganic methacrylates such as metal salts are added in a quantity advantageously ranging between 0 and 20 phr, or organic peroxides, such as isopropyl benzene peroxide for example, in a quantity advantageously ranging between 0 and 15 phr.

Advantageously, the compound made of an elastomeric material also comprises reinforcement fibres, more advantageously in a quantity ranging between 2 and 40 phr, even more advantageously 20 phr. The reinforcement fibres advantageously have a length ranging between 0.1 and 10 mm.

The use of fibres enables to further improve the mechanical characteristics of the compound constituting the body.

Advantageously, the reinforcement fibres are based on aromatic polyamides, advantageously paramids, for example Technora® fibres can be advantageously used, adhering to the compound by means of an RFL-based treatment, where RFL is the acronym for resorcinol and formaldehyde latex. For example, the latex used could be VP-SBR-based, i.e. a vinylpyridine-acrylonitrile-butadiene copolymer.

Aramid fibres have proved to be particularly effective, such as Technora fibres from Teijn with a length of 1 mm for example.

The covering fabric 5 of the toothing 4 or the possible covering fabric 7 of the back 6 can be formed by one or more layers and can be obtained by several weaving techniques, for example, by the technique known as 2x2 twill.

The covering fabric 5 of the toothing 4 and the covering fabric 7 of the back 6 are preferably the same.

The covering fabric 5 can also be obtained according to modes of weaving that enable achieving a rough surface to improve mechanical adhesion.

The covering fabric 5 of the teeth advantageously comprises aliphatic or aromatic polyamide, more advantageously aliphatic polyamide, in particular nylon 6.

The belt of the present invention is preferably a toothed belt and even more preferably a helical-toothed belt.

It has been verified that toothed belts with a helix angle o between 1° and 15°, even more preferably between 5° and 10°, enable achieving particularly low noise levels.

It has been experimentally verified that belts according to the present invention exhibit low noise levels, especially when they have helical toothing and are used in the power steering system of motor vehicles.

The power steering system preferably comprises a system comprising a drive pulley and a driven pulley. Preferably, the drive pulley is connected to an electric motor, while the driven pulley is larger and with its central portion mounted on an endless screw with play-free recirculating ball bearings.

The advantages that can be achieved with the toothed belt 1 made according to the present invention are evident from an examination of its characteristics.

The use of a toothed belt according to the present invention enables having low noise levels even at high speeds and, in particular, at the resonance frequencies, thereby solving the above-described problems.

The toothed belt according to the present invention will now be described via examples, but without being limited to them.

EXAMPLE 1

Three toothed belts 1-3 having the characteristics listed in Table 1 have been measured.

Table 1

|  | Belt 1 | Belt 2 | Belt 3 |
|---|---|---|---|
| T | 350 N | 350 N | 350 N |
| ML | 0.035 g/mm | 0.115 g/mm | 0.037 g/mm |
| Lt | 72.989 mm | 72.989 mm | 72.989 mm |
| Cp | 40 | 33 | 40 |
| Zdrive | 51 | 51 | 51 |
| Tooth height | 0.70 mm | 0.70 mm | 0.70 mm |
| W | 28 | 28 | 28 |

(continued)

|  | Belt 1 | Belt 2 | Belt 3 |
|---|---|---|---|
| $W_t$ | 0.66 mm | 2.71 | 0.68 |
| P | 2.008 | 2.008 | 2.008 |
| f_vibration | 725 Hz | 410 Hz | 706 Hz |
| $\omega 1$ | 853 rpm | 482 rpm | 830 rpm |
| dB (A) | 72 | 47 | 71 |
| $\omega 2 = 2 \times \omega 1$ | 1706 rpm | 964 rpm | 1661 rpm |
| dB (A) | 69 | 52 | 67 |
| $\omega 3 = 3 \times \omega 1$ | 2559 rpm | 1446 rpm | 2490 rpm |
| dB (A) | 80 | 57 | 75 |
| D | D=47 | D=192 | D=48 |
| Helix angle | 5° | 5° | 5° |

Table 1 lists the resonance values $\omega$ with the associated noise value on the next row, as was detected at that resonance frequency and measured under the conditions listed in Table 2. The noise value is given in dB(A).

As can be noted from the values of $\omega 1$, $\omega 2$ and $\omega 3$, the noise values dB(A) at the three resonance lengths are much lower for belt 2, with a value of D equal to 192, than for belts 1 and 3, where the value of D is respectively 47 and 48 and therefore in any case below the claimed range.

In particular, the noise values detected at the various resonance frequencies for belt 2 according to the invention are always less than 60 dB(A) under these noise measuring conditions. This value is the level below which the noise generated by the belt is not heard by the user.

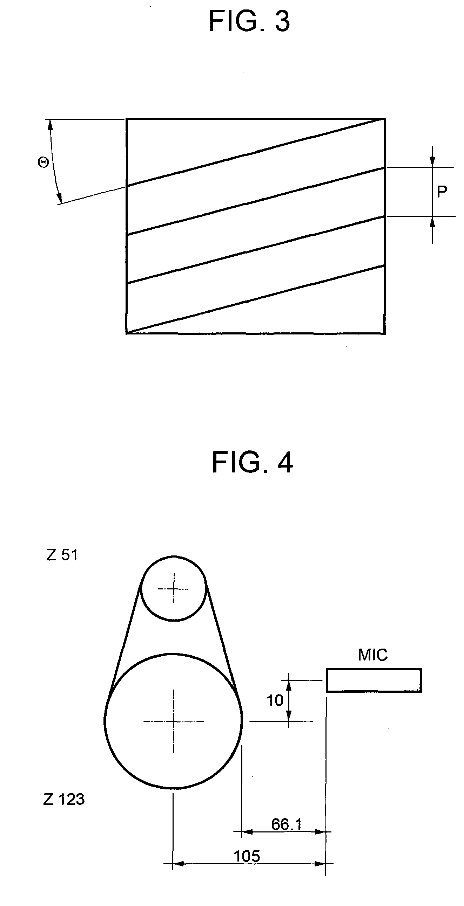

The measurement method of the noise value in dB(A) is illustrated in Figure 4, where a transmission system is shown with two pulleys, indicated by the associated number of teeth as Z51 and Z123. The microphone is indicated as MIC and the associated measurement distance from the pulley is also indicated in Figure 4.

Table 2 lists further measurement conditions for performing the noise test from which the values of $\omega$ listed in Table 1 are obtained.

It should be noted that it has been verified that the tooth profile and helix angle do not affect the relative values between measurements at the various resonance frequencies, while they clearly affect the absolute measurement of the value at a given resonance value.

In order to make the measurements comparable, the measured belts are consequently made with the same tooth profile, helix angle and materials constituting the body.

Table 2

| Belt | 166 teeth |
|---|---|
| Belt width | 28 mm |
| Ramp-up | 100 - 3000 rpm (driver pulley) |
| Ramp-up time | 120 s |
| Temperature | 20°C |

**Claims**

1.  A toothed transmission belt, wherein given

    P = belt pitch (mm)
    $W_t$ = web thickness (mm)
    H = tooth height (mm)

and

$$D = 100 \cdot \frac{w_t}{h \cdot P}$$

wherein D is comprised between 60 and 250 **characterized in that** the web thickness $W_t$ is comprised between 0.7 and 3 mm.

2. The toothed belt according to claim 1, **characterized in that** D is comprised between 100 and 220.

3. The toothed belt according to any one of the preceding claims, **characterized in that** the web thickness $W_t$ is comprised between 1.4 and 2.7 mm.

4. The toothed belt according to any one of the preceding claims, **characterized in that** the pitch P is comprised between 1.5 and 3.5 mm.

5. The toothed belt according to any one of claims 1 to 3, **characterized in that** the pitch P is comprised between 1.8 and 2.5 mm.

6. The toothed belt according to any one of the preceding claims, **characterized in that** the width is comprised between 20 and 40 mm.

7. The toothed belt according to any one of the preceding claims, **characterized in that** the width is comprised between 25 and 35 mm.

8. The toothed belt according to any one of the preceding claims, **characterized in that** the tooth height is comprised between 0.50 and 1.00 mm.

9. The toothed belt according to any one of the preceding claims, **characterized in that** the toothing is helical.

10. The toothed belt according to claim 9, **characterized in that** said helical toothing has a helix angle comprised between 1° and 15°.

11. The toothed belt according to claim 10, **characterized in that** said helical toothing has a helix angle comprised between 5° and 10°.

12. Use of a toothed belt according to any one of claims 1 to 11 in a power steering system of a motor vehicle.

13. A transmission system for the power steering of a vehicle comprising at least one pulley connected to an electric motor and a belt according to any one of claims 1 to 11.

**Patentansprüche**

1. Zahntreibriemen, wobei Folgendes gegeben ist:

   - P = Riementeilung (mm)
   - Wt = Stegdicke (mm)
   - H = Zahnhöhe (mm) und

$$D = 100 \cdot \frac{W_t}{h \cdot P}$$

   - wobei D zwischen 60 und 250 liegt, **dadurch gekennzeichnet, dass** die Stegdicke Wt zwischen 0,7 und 3 mm liegt.

**2.** Zahnriemen nach Anspruch 1, **dadurch gekennzeichnet, dass** D zwischen 100 und 220 liegt.

**3.** Zahnriemen nach einem der vorhergehenden Ansprüche, **dadurch gekennzeichnet, dass** die Stegdicke Wt zwischen 1,4 und 2,7 mm liegt.

**4.** Zahnriemen nach einem der vorhergehenden Ansprüche, **dadurch gekennzeichnet, dass** die Teilung P zwischen 1,5 und 3,5 mm liegt.

**5.** Zahnriemen nach einem der Ansprüche 1 bis 3, **dadurch gekennzeichnet, dass** die Teilung P zwischen 1,8 und 2,5 mm liegt.

**6.** Zahnriemen nach einem der vorhergehenden Ansprüche, **dadurch gekennzeichnet, dass** die Breite zwischen 20 und 40 mm liegt.

**7.** Zahnriemen nach einem der vorhergehenden Ansprüche, **dadurch gekennzeichnet, dass** die Breite zwischen 25 und 35 mm liegt.

**8.** Zahnriemen nach einem der vorhergehenden Ansprüche, **dadurch gekennzeichnet, dass** die Zahnhöhe zwischen 0,50 und 1,00 mm liegt.

**9.** Zahnriemen nach einem der vorhergehenden Ansprüche, **dadurch gekennzeichnet, dass** die Verzahnung wendelförmig ist.

**10.** Zahnriemen nach Anspruch 9, **dadurch gekennzeichnet, dass** die wendelförmige Verzahnung einen Schrägungswinkel aufweist, der zwischen 1° und 15° liegt.

**11.** Zahnriemen nach Anspruch 10, **dadurch gekennzeichnet, dass** die wendelförmige Verzahnung einen Schrägungswinkel aufweist, der zwischen 5° und 10° liegt.

**12.** Verwendung eines Zahnriemens nach einem der Ansprüche 1 bis 11 in einem Servolenksystem eines Kraftfahrzeugs.

**13.** Übertragungssystem für die Servolenkung eines Fahrzeugs, das wenigstens eine mit einem Elektromotor verbundene Riemenscheibe und einen Riemen gemäß einem der Ansprüche 1 bis 11 umfasst.

**Revendications**

**1.** Courroie de transmission dentée, dans laquelle étant donné

P = pas de courroie (mm)
Wt = épaisseur d'âme (mm)
H = hauteur de dent (mm)

et

$$D = 100 \cdot \frac{W_t}{h \cdot P}$$

dans laquelle D est compris entre 60 et 250, **caractérisée en ce que** l'épaisseur d'âme $W_t$ est comprise entre 0,7 et 3 mm.

**2.** Courroie dentée selon la revendication 1, **caractérisée en ce que** D est compris entre 100 et 220.

**3.** Courroie dentée selon l'une quelconque des revendications précédentes, **caractérisée en ce que** l'épaisseur d'âme $W_t$ est comprise entre 1,4 et 2,7 mm.

**4.** Courroie dentée selon l'une quelconque des revendications précédentes, **caractérisée en ce que** le pas P est compris entre 1,5 et 3,5 mm.

5. Courroie dentée selon l'une quelconque des revendications 1 à 3, **caractérisée en ce que** le pas P est compris entre 1,8 et 2,5 mm.

6. Courroie dentée selon l'une quelconque des revendications précédentes, **caractérisée en ce que** la largeur est comprise entre 20 et 40 mm.

7. Courroie dentée selon l'une quelconque des revendications précédentes, **caractérisée en ce que** la largeur est comprise entre 25 et 35 mm.

8. Courroie dentée selon l'une quelconque des revendications précédentes, **caractérisée en ce que** la hauteur de dent est comprise entre 0,50 et 1,00 mm.

9. Courroie dentée selon l'une quelconque des revendications précédentes, **caractérisée en ce que** la denture est hélicoïdale.

10. Courroie dentée selon la revendication 9, **caractérisée en ce que** ladite denture hélicoïdale a un angle d'hélice compris entre 1° et 15°.

11. Courroie dentée selon la revendication 10, **caractérisée en ce que** ladite denture hélicoïdale a un angle d'hélice compris entre 5° et 10°.

12. Utilisation d'une courroie dentée selon l'une quelconque des revendications 1 à 11 dans un système de direction assistée d'un véhicule à moteur.

13. Système de transmission pour la direction assistée d'un véhicule comprenant au moins une poulie connectée à un moteur électrique et une courroie selon l'une quelconque des revendications 1 à 11.

FIG. 1

FIG. 2

EP 2 803 879 B1

# FIG. 3

# FIG. 4

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4330853 A

- EP 1614933 A

**Non-patent literature cited in the description**

- Noise and life of Helical Timing belt drives. *Journal of Mechanical Design,* June 1999, vol. 121, 275

- Application of toothed belts to OA devices. *the Journal of Electronic Engineering 2209,* 23 July 1986